# EUROPÄISCHE PATENTSCHRIFT

(11) **EP 3 057 172 B1**
(45) Veröffentlichungstag und Bekanntmachung des Hinweises auf die Patenterteilung: **31.07.2019**
(21) Anmeldenummer: 15155215.5
(22) Anmeldetag: 16.02.2015
(51) Int. Cl.: H01M 10/6571, H01M 10/615, H01M 10/647

(54) **Heizvorrichtung für Batterie**
Heating device for battery
Dispositif de chauffage pour batterie

(43) Veröffentlichungstag der Anmeldung: 17.08.2016
(73) Patentinhaber: Samsung SDI Co., Ltd., Yongin-si, Gyeonggi-do (KR)
(72) Erfinder: Eichberger, Georg, 8044 Graz (AT)
(74) Vertreter: Gulde & Partner

(56) Entgegenhaltungen:
- EP-A1- 2 515 408
- DE-A1-102008 015 625
- US-A1- 2005 264 257
- MINCO SALES AND SUPPORT: "FLEXIBLE HEATERS DESIGN GUIDE", BROCHURE COPYRIGHTED 2007 , 22. Juli 2014 (2014-07-22), Seiten 1-64, XP002742670, Gefunden im Internet: URL:http://web.archive.org/web/20140722171 146/http://www.minco.com/Heaters/~/media/W WW/Resource%20Library/Minco_HeaterDesignGu ide.ashx

## Beschreibung

### Gebiet der Erfindung

Die vorliegende Erfindung betrifft eine Heizvorrichtung für eine Batterie und eine Batterie. Die Heizvorrichtung umfasst insbesondere eine Heizfolie und eine Leiterplatte.

### Stand der Technik

Für leistungsstarke Batterien, insbesondere Antriebsbatterien für Fahrzeuge, mit einer Vielzahl von Batteriezellen, wie etwa Lithium-Ionen Zellen, ist es bekannt dass eine geeignete Temperierung die Leistung und Lebensdauer der Batterie erheblich verbessern kann. Für das Heizen von Batterien in kaltem Zustand, besonders im Winter, ist es bekannt, elektrische Heizfolien einzusetzen.

So offenbart beispielsweise die DE 10 2010 017 561 A1 eine Kühlvorrichtung für eine Batterie, die eine Luftkühlung und eine Flüssigkeitskühlung umfasst. Zusätzlich umfasst die Kühlvorrichtung einen dritten Bereich mit einer Heizeinrichtung, die mindestens eine Heizfolie umfasst.
Aus der US 2005/264257 A1 ist eine Batterieheizung mit einer Heizplatte, bestehend aus Heizelementen mit einzelnen flachen PTC-Halbleitern und einem durch Drahtverbindungenmit der Batterieheizung verbundenem Kontrollgerät bekannt.

Die EP 2 515 408 A1 beschreibt eine Kontrollvorrichtung für eine Batterie, wobei die Batterie aus mehreren prismatischen Zellen besteht und eine flexible Kontrollplatte aufweist, die oberhalb der Batteriezellen liegt und durch Drahtverbindungen mit mehreren Heizplatten verbunden ist.

Mit der DE 10 2008 015625 A1 wurde eine Batterie bekannt, welche ein Gehäuse mit einer wärmeisolierenden Umhausung aufweist, in welcher als Flächenheizung ausgebildete elektronische Komponenten angeordnet sind.

Aus der Veröffentlichung MINCO SALES AND SUPPORT: "FLEXIBLE HEATERS DESIGN GUIDE", BROCHURE COPYRIGHTED 2007, 22. Juli 2014 (2014-07-22), Seiten 1 - 65, XP002742670 sind flexible Heizungen für verschiedenste Anwendungen bekannt

### Zusammenfassung der Erfindung

Es ist eine Aufgabe der Erfindung, eine Heizvorrichtung für eine Batterie und eine Batterie mit einer solchen Heizvorrichtung anzugeben, wobei durch die Heizvorrichtung ein effizientes Heizen der Batterie ermöglicht wird.

Die Lösung der Aufgabe erfolgt durch eine Heizvorrichtung mit den Merkmalen des Anspruchs 1.
Erfindungsgemäß ist eine Heizvorrichtung vorgesehen, die im Wesentlichen aus zwei flexiblen Elementen besteht, nämlich aus einerseits einer schon üblicherweise flexiblen Heizfolie und andererseits aus der ebenfalls flexibel ausgebildeten Leiterplatte, die die Steuerung der Heizfolie darstellt.

Durch diese doppelt flexible Ausbildung der Heizvorrichtung und die Verwendung eines einfachen Verbindungselements kann die gesamte Heizvorrichtung sehr nahe an den zu heizenden Batteriezellen angeordnet sein, wodurch die Heizfolie genau die zu heizenden Zellen erwärmt und keine zusätzlichen Bauteile erforderlich sind, die unnötigerweise mitgeheizt würden. Die Heizvorrichtung kann dabei durch die flexible Ausführung auch Vibrationen der Batterie leichter aufnehmen, so dass eine effiziente Heizung auch langfristig gewährleistet bleibt.

Als "flexibel" wird hierbei eine Leiterplatte bezeichnet, die so ausgebildet ist, dass sie Biegungen und ähnliche Verformungen gut aufnehmen kann, anstatt dabei zu brechen.

Weiterbildungen der Erfindung sind in den abhängigen Ansprüchen, der Beschreibung sowie den beigefügten Zeichnungen angegeben.

Das Verbindungselement ist als flexibles Verbindungselement ausgebildet, so dass die gesamte Heizvorrichtung flexibel ausgebildet ist.
Statt über ein einziges Verbindungselement können die Leiterplatte und die Heizfolie auch über mehrere Verbindungselemente verbunden sein, insbesondere mehrere flexible Verbindungselemente.

Insbesondere ist das Verbindungselement bzw. jedes Verbindungselement als flache Brücke zwischen den Flächen der Heizfolie einerseits und der flexiblen Leiterplatte andererseits ausgebildet.

Die Leiterplatte, das Verbindungselement und die Heizfolie sind einstückig ausgebildet, so dass die gesamte Heizvorrichtung im Wesentlichen durch ein einziges, flexibles Bauteil gebildet wird.

Die Heizfolie ist bevorzugt als PTC (Positive Temperature Coefficient)-Heizfolie ausgebildet.

Die Leiterplatte kann zusätzlich zur Steuerung der Heizfolie auch zur Zellspannungsüberwachung beispielsweise eines Batteriemoduls eingerichtet sein und/oder zur Kommunikation mit einer Steuerungselektronik der Batterie.

An einer Fläche der Heizfolie ist bevorzugt eine Klebefolie angebracht, um die Heizfolie an den Batteriezellen direkt zu befestigen und um einen definierten thermischen Übergang bereitzustellen.

Die Klebefolie bedeckt bevorzugt annähernd die gesamte Fläche der Heizfolie.

In einer erfindungsgemäßen Batterie die mehrere prismatische Batteriezellen umfasst, ist die Heizfolie einer erfindungsgemäßen Heizvorrichtung derart an den Batteriezellen angeordnet sein, dass die Heizfolie Seitenflächen von mindestens zwei, bevorzugt von allen Batteriezellen zumindest eines Batteriemoduls, kontaktiert.

Eine erfindungsgemäße Batterie kann also auch aus mehreren Batteriemodulen bestehen, die jeweils mehrere Batteriezellen umfassen und jeweils über eine eigene Leiterplatte und damit verbundene eigene Heizfolie verfügen.

Die flexible Leiterplatte liegt bevorzugt auf mehreren Batteriezellen auf, insbesondere in Einbaurichtung der Batterie oben auf den Batteriezellen. Dabei kann die flexible Leiterplatte auf mehreren Batteriezellen jeweils zwischen deren elektrischen Anschlusselementen aufliegen.

Die Heizfolie ist bevorzugt zumindest annähernd in einem rechten Winkel zur flexiblen Leiterplatte angeordnet, so dass die Leiterplatte oben auf der Batterie aufliegen kann und die Heizfolie seitlich an der Batterie anliegen und dort Stirnseiten mehrerer Batteriezellen kontaktieren kann.

In einer erfindungsgemäßen Batterie können zumindest auf zwei Seiten der flexiblen Leiterplatte jeweils zumindest eine Heizfolie mit der flexiblen Leiterplatte elektrisch verbunden sein. An der Leiterplatte können also beispielsweise zwei oder auch vier Heizfolien über Verbindungselemente verbunden sein, so dass die Leiterplatte die Steuerung aller angeschlossenen Heizfolien durchführen kann. Die Heizfolien können an den Seiten der Batterie, insbesondere zwei oder vier Seiten, jeweils seitlich anliegen.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Darstellung einer erfindungsgemäßen Heizvorrichtung für eine Batterie.
- Fig. 2: ist eine schematische dreidimensionale Darstellung einer erfindungsgemäßen Batterie oder eines Batteriemoduls.

### Detaillierte Beschreibung der Erfindung

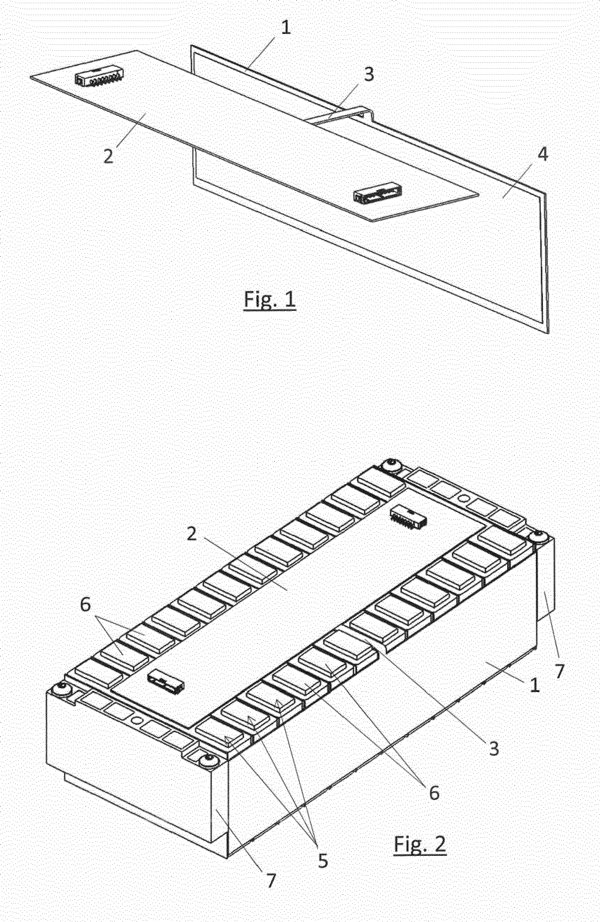

In Fig. 1 ist eine erfindungsgemäße Heizvorrichtung für eine Batterie dargestellt.

Die Heizvorrichtung umfasst eine PTC-Heizfolie 1. An einer der beiden Flächen der Heizfolie 1 ist eine Klebefolie 4 angebracht, die annähernd die gesamte Fläche der Heizfolie 1 bedeckt. Mittels dieser Klebefolie 4 kann die Heizfolie 1 an Batteriezellen befestigt werden.

Die Heizfolie 1 ist über ein flexibles Verbindungselement 3 mit der Leiterplatte 2 elektrisch verbunden, die zur Steuerung der Heizfolie 1 und bevorzugt auch zur Steuerung des Batteriemodules eingerichtet ist.

Die Leiterplatte 2, das Verbindungselement 3 und die Heizfolie 1 bilden zusammen ein einziges Bauteil dass an einer Batterie angebracht werden kann.

In Fig. 2 ist eine erfindungsgemäße Batterie dargestellt oder eines von mehreren Batteriemodulen einer Batterie, wobei das Batteriemodul mehrere prismatische Batteriezellen 5, zwischen zwei Stirnplatten 7 zur Befestigung des Batteriemoduls oder der Batterie umfasst. Die Heizfolie 1 einer Heizvorrichtung, wie sie in Fig. 1 dargestellt ist, ist an den Batteriezellen 5 seitlich angeordnet und mittels Klebefolie 4 an den Batteriezellen 5 befestigt.

Die flexible Leiterplatte 2 der Heizeinrichtung liegt auf mehreren Batteriezellen 5 in Einbaurichtung der Batterie oben auf. Die Leiterplatte 2 kann dabei mit Hilfe eines zusätzlichen Bauteiles, zum Beispiel einer Kunststoffabdeckung, befestigt sein.

Die flexible Leiterplatte 2 ist jeweils zwischen den beiden elektrischen Anschlusselementen 6 der einzelnen Batteriezellen 5 angeordnet, so dass sie den Raum zwischen den Polen der Batteriezellen 5 nutzt.

Die Heizfolie 1 befindet sich, über das Verbindungselement 3 verbunden, im rechten Winkel zur flexiblen Leiterplatte 2 an der Seite der Batteriezellen, mit welchen sie verklebt ist.

### Bezugszeichenliste

- 1: Heizfolie
- 2: Leiterplatte
- 3: Verbindungselement
- 4: Klebefolie
- 5: Batteriezelle
- 6: Anschlusselement
- 7: Stirnplatte

## Patentansprüche

1. Batterie, umfassend mehrere prismatische Batteriezellen (5) und eine Heizvorrichtung,
wobei die Heizvorrichtung eine Heizfolie (1) und eine Leiterplatte (2), die zur Steuerung der Heizfolie (1) eingerichtet ist, umfasst und die Heizfolie (1) über zumindest ein Verbindungselement (3) mit der Leiterplatte (2) elektrisch verbunden ist,
die Heizfolie (1) der Heizvorrichtung derart an den Batteriezellen (5) angeordnet ist, dass die Heizfolie (1) Seitenflächen von mindestens zwei Batteriezellen (5), bevorzugt von allen Batteriezellen (5) zumindest eines Batteriemoduls, kontaktiert,
**dadurch gekennzeichnet, dass**
die Leiterplatte (2) als flexible Leiterplatte (2) und das Verbindungselement (3) als flexibles Verbindungselement (3) ausgebildet sind, und die Leiterplatte (2), das Verbindungselement (3) und die Heizfolie (1) einstückig ausgebildet sind.

2. Batterie nach Anspruch 1,
**dadurch gekennzeichnet, dass** die flexible Leiterplatte (2) auf mehreren Batteriezellen (5) aufliegt, insbesondere in Einbaurichtung der Batterie oben aufliegt.

3. Batterie nach Anspruch 1 oder 2,
**dadurch gekennzeichnet, dass** die flexible Leiterplatte (2) auf mehreren Batteriezellen (5), jeweils zwischen elektrischen Anschlusselementen (6) der Batteriezellen (5), aufliegt.

4. Batterie nach einem der vorhergehenden Ansprüche,
**dadurch gekennzeichnet , dass** die Heizfolie (1) zumindest annähernd in einem rechten Winkel zur flexiblen Leiterplatte (2) angeordnet ist.

5. Batterie nach einem der vorhergehenden Ansprüche,
**dadurch gekennzeichnet, dass** zumindest auf zwei Seiten der flexiblen Leiterplatte (2) jeweils zumindest eine Heizfolie (1) mit der flexiblen Leiterplatte (2) elektrisch verbunden ist.

6. Batterie nach Anspruch 1,
**dadurch gekennzeichnet , dass** die Heizfolie (1) als PTC-Heizfolie ausgebildet ist.

7. Batterie nach Anspruch 1,
**dadurch gekennzeichnet , dass** an einer Fläche der Heizfolie (1) eine Klebefolie (4) angebracht ist.

8. Batterie nach Anspruch 7,
**dadurch gekennzeichnet, dass** die Klebefolie (4) annähernd die gesamte Fläche der Heizfolie (1) bedeckt.

## Claims

1. A battery, comprising a plurality of prismatic battery cells (5) and a heating device,
wherein the heating device comprises a heating foil (1) and a printed circuit board (2) which is set up to control the heating foil (1), and the heating foil (1) is electrically connected to the printed circuit board (2) by way of at least one connecting element (3), the heating foil (1) of the heating device is arranged on the battery cells (5) such that the heating foil (1) contacts side faces of at least two battery cells (5), preferably of all the battery cells (5) of at least one battery module,
**characterised in that**
the printed circuit board (2) is designed as a flexible printed circuit board (2) and the connecting element (3) as a flexible connecting element (3), and the printed circuit board (2), the connecting element (3) and the heating foil (1) are formed in one piece.

2. A battery according to Claim 1,
**characterised in that** the flexible printed circuit board (2) lies on a plurality of battery cells (5), in particular on top in the mounting direction of the battery.

3. A battery according to Claim 1 or 2,
**characterised in that** the flexible printed circuit board (2) lies on a plurality of battery cells (5), in each case between electrical connection elements (6) of the battery cells (5).

4. A battery according to one of the preceding claims,
**characterised in that** the heating foil (1) is arranged at least approximately at a right angle to the flexible printed circuit board (2).

5. A battery according to one of the preceding claims,
**characterised in that** at least on two sides of the flexible printed circuit board (2) in each case at least one heating foil (1) is electrically connected to the flexible printed circuit board (2).

6. A battery according to Claim 1,
**characterised in that** the heating foil (1) is designed as a PTC heating foil.

7. A battery according to Claim 1,
**characterised in that** an adhesive film (4) is attached to a surface of the heating foil (1).

8. A battery according to Claim 7,
**characterised in that** the adhesive film (4) covers approximately the entire surface of the heating foil (1).

## Revendications

1. Batterie, comprenant plusieurs éléments de batterie (5) prismatiques et un dispositif de chauffage,
où le dispositif de chauffage comporte une feuille chauffante (1) et une carte de circuits imprimés (2), qui est conçue pour commander la feuille chauffante (1), et la feuille chauffante (1) est reliée électriquement à la carte de circuits imprimés (2) par l'intermédiaire d'au moins un élément de liaison (3),
la feuille chauffante (1) du dispositif de chauffage est agencée sur les éléments de batterie (5) de telle sorte que la feuille chauffante (1) est en contact avec les surfaces latérales d'au moins deux éléments de batterie (5), de préférence de tous les éléments de batterie (5) d'au moins un module de batterie,
**caractérisée en ce que**
la carte de circuits imprimés (2) est réalisée sous la forme d'une carte de circuits imprimés (2) flexible et l'élément de liaison (3) sous la forme d'un élément de liaison (3) flexible,
et la carte de circuits imprimés (2), l'élément de liaison (3) et la feuille chauffante (1) sont réalisés d'une seule pièce.

2. Batterie selon la revendication 1, **caractérisée en ce que** la carte de circuits imprimés (2) flexible repose sur plusieurs éléments de batterie (5), en particulier repose en haut dans le sens de montage de la batterie.

3. Batterie selon la revendication 1 ou 2, **caractérisée en ce que** la carte de circuits imprimés (2) flexible repose sur plusieurs éléments de batterie (5), dans chaque cas entre des éléments de connexion électriques (6) des éléments de batterie (5).

4. Batterie selon l'une quelconque des revendications précédentes, **caractérisée en ce que** la feuille chauffante (1) est agencée au moins presque à angle droit par rapport à la carte de circuits imprimés (2) flexible.

5. Batterie selon l'une quelconque des revendications précédentes, **caractérisée en ce que** respectivement au moins une feuille chauffante (1) est reliée électriquement à la carte de circuits imprimés (2) flexible au moins sur deux faces de la carte de circuits imprimés (2) flexible.

6. Batterie selon la revendication 1, **caractérisée en ce que** la feuille chauffante (1) est réalisée sous la forme d'une feuille chauffante (1) à coefficient de température positif.

7. Batterie selon la revendication 1, **caractérisée en ce qu'**une feuille adhésive (4) est appliquée sur une surface de la feuille chauffante (1).

8. Batterie selon la revendication 7, **caractérisée en ce que** la feuille adhésive (4) recouvre presque toute la surface de la feuille chauffante (1).
